(19) Europäisches Patentamt
European Patent Office
Office européen des brevets

(11) **EP 4 492 879 A1**

(12) **EUROPEAN PATENT APPLICATION**
published in accordance with Art. 153(4) EPC

(43) Date of publication:
**15.01.2025 Bulletin 2025/03**

(21) Application number: **23777832.9**

(22) Date of filing: **14.03.2023**

(51) International Patent Classification (IPC):
*H04W 56/00* (2009.01)

(52) Cooperative Patent Classification (CPC):
**H04W 56/00**

(86) International application number:
**PCT/CN2023/081383**

(87) International publication number:
**WO 2023/185456 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.03.2022 CN 202210304597**

(71) Applicant: **Huawei Technologies Co., Ltd.
Shenzhen, Guangdong 518129 (CN)**

(72) Inventors:
• XU, Zhou
**Shenzhen, Guangdong 518129 (CN)**
• ZHANG, Liwen
**Shenzhen, Guangdong 518129 (CN)**
• LI, Huan
**Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **COMMUNICATION METHOD AND APPARATUS, AND COMPUTER READABLE STORAGE MEDIUM**

(57)     This application provides a communication method and apparatus, and a computer-readable storage medium. The method includes: receiving a first timing advance (timing advance, TA) value from a network device, where the first TA value is a value determined based on a timing advance offset and a distance between the network device and a terminal device; and sending a first uplink signal to the network device based on the first TA value, where boundaries of uplink frames corresponding to the first uplink signal and a second uplink signal in the network device are the same, and the first uplink signal and the second uplink signal are signals of different systems. According to technical solutions provided in this application, signal demodulation performance can be improved in a scenario in which different systems coexist.

Network device

Terminal device

S501: First TA value

S502: Send a first uplink signal based on the first TA value

FIG. 5

EP 4 492 879 A1

## Description

This application claims priority to Chinese Patent Application No. 202210304597.3, filed with the China National Intellectual Property Administration on March 26, 2022 and entitled "COMMUNICATION METHOD AND APPARATUS, AND COMPUTER-READABLE STORAGE MEDIUM", which is incorporated herein by reference in its entirety.

## TECHNICAL FIELD

This application relates to the field of wireless communication technologies, and in particular, to a communication method and apparatus, and a computer-readable storage medium.

## BACKGROUND

To ensure orthogonality of uplink transmission, a network device requires that a difference between time points at which signals of different terminal devices from a same subframe arrive at a same network device be within a specific range. Therefore, a timing advance (Timing Advance, TA) mechanism is introduced. The terminal device may perform uplink transmission based on a TA. To be specific, an uplink frame in which the terminal device sends uplink data needs to be advanced by corresponding time in comparison with a downlink frame.

In a scenario in which different systems coexist, for example, dynamic spectrum sharing (Dynamic Spectrum Sharing, DSS), a 4th generation mobile communication (4th Generation, 4G) long term evolution (Long Term Evolution, LTE) system and a 5th generation mobile communication (5th Generation, 5G) new radio (New Radio, NR) system are allowed to share a same time-frequency resource. However, because a TA value in the LTE system is predefined, and a TA value in the NR system is determined based on a timing advance offset, TA values of the terminal device in the LTE system and the NR system are different, and boundaries of uplink frames of uplink signals are different. In some application scenarios in which the boundaries of the uplink frames of the uplink signals need to be the same, for example, uplink carrier aggregation in a single TAG scenario, a bit error rate of a signal is high. Therefore, how to reduce the bit error rate of the signal in the scenario in which different systems coexist is an urgent problem to be resolved.

## SUMMARY

Embodiments of this application provide a communication method and apparatus, and a computer-readable storage medium, to improve signal demodulation performance.

According to a first aspect, this application provides a communication method. The method may be applied to a terminal device, or may be applied to an apparatus (for example, a chip, a chip system, or a circuit) in the terminal device or an apparatus that can be used together with the terminal device. The following uses an example in which the method is applied to the terminal device for description. The method may include: receiving a first TA value from a network device, where the first TA value is a value determined based on a timing advance offset and a distance between the network device and the terminal device; and sending a first uplink signal to the network device based on the first TA value, where boundaries of uplink frames corresponding to the first uplink signal and a second uplink signal in the network device are the same, and the first uplink signal and the second uplink signal are signals of different systems.

In the solution provided in this application, the terminal device may determine, based on the TA value from the network device, a time point at which the uplink signal is sent to the network device, and does not need to sense the timing advance offset, so that when different systems (for example, an LTE system and an NR system) coexist, the boundaries of the uplink frames corresponding to uplink signals in the network device are the same. Therefore, an application scenario in which the boundaries of the uplink frames of the uplink signals need to be the same when different systems coexist, for example, a single timing advance group (timing advance group, TAG) scenario, can be implemented, to reduce a bit error rate of a signal and finally improve quality of a communication system.

It may be understood that the single TAG scenario may mean that one TAG includes one or more serving cells. The serving cells have a same TA value. In other words, a plurality of different carriers use a same TA value. For example, a normal uplink (normal uplink, NUL) carrier and a supplementary uplink (supplementary uplink, SUL) carrier may belong to a same TAG. In other words, two uplink carriers in one TAG use a same TA value. The single TAG scenario in embodiments of this application may include carrier switching in carrier aggregation of a downlink reference signal when a frequency division duplex mode and a time division duplex mode coexist (for example, sounding reference signal (Sounding Reference Signal, SRS) carrier switching), carrier aggregation-based uplink transmit channel switching (a single TAG scenario supported in a protocol) in 3rd generation partnership project (3rd Generation Partnership Project, 3GPP) release (release, R) 16, concurrent carrier aggregation in a single TAG scenario in 3GPP R15, supplementary uplink in 3GPP R15, supplementary uplink in 3GPP R16, and the like.

In a possible implementation, that the first uplink signal and the second uplink signal are signals of different systems includes: The first uplink signal is a signal of the LTE system, and the second uplink signal is a signal of the NR system; or the first uplink signal is a signal of the NR system, and the second uplink signal is a signal of the LTE system.

Different systems may be LTE and NR. For example, in DSS, LTE and NR share a time-frequency resource, where one uplink signal may be of the LTE system, and another uplink signal may be of the NR system. It may be understood that, in this embodiment of this application, LTE and NR are merely used as examples for description, and the system may alternatively be a 6G communication system, another communication system evolved after 5G, or the like. A system type is not limited in this application. When different systems coexist, in the solution provided in this application, the boundaries of the uplink frames corresponding to the uplink signals in the network device can be the same. Further, the application scenario in which the boundaries of the uplink frames of the uplink signals need to be the same when different systems coexist, for example, the single TAG scenario, can be implemented, to reduce the bit error rate of the signal and finally improve the quality of the communication system.

In a possible implementation, the first uplink signal and the second uplink signal are signals in different duplex modes.

The first uplink signal and the second uplink signal may be signals in different duplex modes. For example, the first uplink signal is in a time division duplex (time division duplex, TDD) mode, and the second uplink signal is in a frequency division duplex (frequency division duplex, FDD) mode. Because the timing advance offset is for the TDD mode, a timing advance offset in the FDD mode is 0. In the solution provided in this application, the boundaries of the uplink frames corresponding to the uplink signals in different duplex modes in the network device can be the same, and further, the application scenario in which the boundaries of the uplink frames of the uplink signals need to be the same, for example, the single TAG scenario, can be implemented, to reduce the bit error rate of the signal and finally improve the quality of the communication system.

In a possible implementation, the different duplex modes are any two of the following different duplex modes: the FDD mode, the TDD mode, and a supplementary uplink (supplementary upload, SUL) mode. It may be understood that the duplex mode in this embodiment of this application may alternatively be another duplex mode evolved after 5G. A type of the duplex mode is not limited in this application.

In a possible implementation, the receiving a first TA value from a network device includes: receiving a random access response (random access response, RAR) message from the network device, where the RAR message includes the first TA value.

In the solution provided in this application, the network device may send the first TA value to the terminal device by using the RAR message, so that signaling overheads can be reduced.

In a possible implementation, a timing advance command (Timing Advance Command, TAC) in the RAR message includes the first TA value.

In the solution provided in this application, the TAC in the RAR message may indicate the first TA value, so that the signaling overheads can be reduced.

In a possible implementation, the timing advance offset is an offset of an uplink window relative to a downlink window.

In the solution provided in this application, for example, for the network device, the timing advance offset is an offset of an uplink receiving window relative to a downlink sending window. For the terminal device, the timing advance offset is an offset of an uplink sending window relative to a downlink receiving window.

In a possible implementation, the timing advance offset is a TA offset.

In a possible implementation, an absolute value of the timing advance offset is 7 microseconds (microseconds, $\mu$s), 13 $\mu$s, or 20 $\mu$s.

According to a second aspect, this application provides a communication method. The method may be applied to a network device, or may be applied to an apparatus (for example, a chip, a chip system, or a circuit) in the network device or an apparatus that can be used together with the network device. The following uses an example in which the method is applied to the network device for description. The method may include: sending a first TA value to a terminal device, where the first TA value is a value determined based on a timing advance offset and a distance between the network device and the terminal device; and receiving a first uplink signal from the terminal device, where a sending time point of the first uplink signal is determined based on the first TA value, boundaries of uplink frames corresponding to the first uplink signal and a second uplink signal in the network device are the same, and the first uplink signal and the second uplink signal are signals of different systems.

In the solution provided in this application, after determining the TA value based on the timing advance offset and the distance between the network device and the terminal device, the network device may send the TA value to the terminal device. In this way, the terminal device may send the uplink signal based on the TA value, and does not need to sense the timing advance offset, so that when different systems (for example, an LTE system and an NR system) coexist, the boundaries of the uplink frames corresponding to the uplink signals in the network device are the same. Therefore, an application scenario in which the boundaries of the uplink frames of the uplink signals need to be the same when different systems coexist, for example, a single TAG scenario, can be implemented, to reduce a bit error rate of a signal and finally improve quality of a communication system.

It may be understood that the second aspect may be performed by the network device, and specific content of the second aspect corresponds to content of the first aspect. For corresponding features of the second aspect and beneficial effects achieved by the second aspect, refer to descriptions of the first aspect. To avoid repetition, detailed descriptions are properly omitted herein.

In a possible implementation, that the first uplink signal and the second uplink signal are signals of different systems includes: The first uplink signal is a signal of the long term evolution LTE system, and the second uplink signal is a signal of the new radio NR system; or the first uplink signal is a signal of the NR system, and the second uplink signal is a signal of the LTE system.

In a possible implementation, the first uplink signal and the second uplink signal are signals in different duplex modes.

In a possible implementation, the different duplex modes are any two of the following different duplex modes: an FDD mode, a TDD mode, and an SUL mode.

In a possible implementation, the sending a first TA value to a terminal device includes: sending a RAR message to the terminal device, where the RAR message includes the first TA value.

In a possible implementation, a TAC in the RAR message includes the first TA value.

In a possible implementation, the timing advance offset is an offset of an uplink window relative to a downlink window.

In a possible implementation, the timing advance offset is a TA offset.

In a possible implementation, an absolute value of the timing advance offset is 7 $\mu$s, 13 $\mu$s, or 20 $\mu$s.

According to a third aspect, this application provides a communication method. The method may be applied to a terminal device, or may be applied to an apparatus (for example, a chip, a chip system, or a circuit) in the terminal device or an apparatus that can be used together with the terminal device. The following uses an example in which the method is applied to the terminal device for description. The method may include: receiving a first TA value from a network device, where the first TA value is a value determined based on a timing advance offset and a distance between the network device and the terminal device; and sending a first uplink signal to the network device based on the first TA value, where boundaries of uplink frames corresponding to the first uplink signal and a second uplink signal in the network device are the same, and the first uplink signal and the second uplink signal are signals of a same system.

In the solution provided in this application, the terminal device may determine, based on the TA value from the network device, a time point at which the uplink signal is sent to the network device, and does not need to sense the timing advance offset, so that the boundaries of the uplink frames corresponding to uplink signals in the network device are the same in a same system (for example, an LTE system or an NR system). Therefore, an application scenario in which the boundaries of the uplink frames of the uplink signals need to be the same, for example, a single TAG scenario, can be implemented, to reduce a bit error rate of a signal.

It may be understood that specific content of the third aspect corresponds to content of the first aspect. For corresponding features of the third aspect and beneficial effects achieved by the third aspect, refer to descriptions of the first aspect. To avoid repetition, detailed descriptions are properly omitted herein.

According to a fourth aspect, this application provides a communication method. The method may be applied to a network device, or may be applied to an apparatus (for example, a chip, a chip system, or a circuit) in the network device or an apparatus that can be used together with the network device. The following uses an example in which the method is applied to the network device for description. The method may include: sending a first TA value to a terminal device, where the first TA value is a value determined based on a timing advance offset and a distance between the network device and the terminal device; and receiving a first uplink signal corresponding to a first uplink from the terminal device, where a sending time point of the first uplink signal is determined based on the first TA value, boundaries of uplink frames corresponding to the first uplink signal and a second uplink signal in the network device are the same, and the first uplink signal and the second uplink signal are signals of a same system.

In the solution provided in this application, the network device may determine the TA value based on the timing advance offset and the distance between the network device and the terminal device, and send the TA value to the terminal device. In this way, the terminal device may send an uplink signal based on the TA value, and does not need to sense the timing advance offset, so that the boundaries of the uplink frames corresponding to uplink signals in the network device are the same in a same system (for example, an LTE system or an NR system). Therefore, an application scenario in which the boundaries of the uplink frames of the uplink signals need to be the same, for example, a single TAG scenario, can be implemented, to reduce a bit error rate of a signal.

It may be understood that specific content of the fourth aspect corresponds to content of the second aspect. For corresponding features of the fourth aspect and beneficial effects achieved by the fourth aspect, refer to descriptions of the second aspect. To avoid repetition, detailed descriptions are properly omitted herein.

According to a fifth aspect, an embodiment of this application provides a communication apparatus.

For beneficial effects, refer to descriptions of the first aspect. Details are not described herein again. The communication apparatus has a function of implementing behavior in the method instance in the first aspect. The function may be implemented by hardware, or may be implemented by executing corresponding software by hardware. The hardware or the software includes one or more modules corresponding to the foregoing function.

The communication apparatus includes: a receiving unit, configured to receive a first TA value from a network device, where the first TA value is a value determined based on a timing advance offset and a distance between the network device and a terminal device; and a sending unit, configured to send a first uplink signal to the network device based on the first TA value, where boundaries of uplink frames corresponding to the first uplink signal and a second uplink signal in the network device are the same, and the first uplink signal and the second uplink signal are signals of different systems.

In a possible implementation, that the first uplink signal and the second uplink signal are signals of different systems includes: The first uplink signal is a signal of an LTE system, and the second uplink signal is a signal of an NR system; or the first uplink signal is a signal of an NR system, and the second uplink signal is a signal of an LTE system.

In a possible implementation, the first uplink signal and the second uplink signal are signals in different duplex modes.

In a possible implementation, the different duplex modes are any two of the following different duplex modes: an FDD mode, a TDD mode, and an SUL mode.

In a possible implementation, the receiving unit is specifically configured to receive a RAR message from the network device, where the RAR message includes the first TA value.

In a possible implementation, a TAC in the RAR message includes the first TA value.

In a possible implementation, the timing advance offset is an offset of an uplink window relative to a downlink window.

In a possible implementation, the timing advance offset is a TA offset.

In a possible implementation, an absolute value of the timing advance offset is 7 $\mu$s, 13 $\mu$s, or 20 $\mu$s.

According to a sixth aspect, an embodiment of this application provides a communication apparatus.

For beneficial effects, refer to descriptions of the second aspect. Details are not described herein again. The communication apparatus has a function of implementing behavior in the method instance in the second aspect. The function may be implemented by hardware, or may be implemented by executing corresponding software by hardware. The hardware or the software includes one or more modules corresponding to the foregoing function.

The communication apparatus includes: a sending unit, configured to send a first TA value to a terminal device, where the first TA value is a value determined based on a timing advance offset and a distance between a network device and the terminal device; and a receiving unit, configured to receive a first uplink signal from the terminal device, where a sending time point of the first uplink signal is determined based on the first TA value, boundaries of uplink frames corresponding to the first uplink signal and a second uplink signal in the network device are the same, and the first uplink signal and the second uplink signal are signals of different systems.

In a possible implementation, that the first uplink signal and the second uplink signal are signals of different systems includes: The first uplink signal is a signal of an LTE system, and the second uplink signal is a signal of an NR system; or the first uplink signal is a signal of an NR system, and the second uplink signal is a signal of an LTE system.

In a possible implementation, the first uplink signal and the second uplink signal are signals in different duplex modes.

In a possible implementation, the different duplex modes are any two of the following different duplex modes: an FDD mode, a TDD mode, and an SUL mode.

In a possible implementation, the sending unit is specifically configured to send a RAR message to the terminal device, where the RAR message includes the first TA value.

In a possible implementation, a TAC in the RAR message includes the first TA value.

In a possible implementation, the timing advance offset is an offset of an uplink window relative to a downlink window.

In a possible implementation, the timing advance offset is a TA offset.

In a possible implementation, an absolute value of the timing advance offset is 7 $\mu$s, 13 $\mu$s, or 20 $\mu$s.

According to a seventh aspect, an embodiment of this application provides a communication apparatus.

For beneficial effects, refer to descriptions of the third aspect. Details are not described herein again. The communication apparatus has a function of implementing behavior in the method instance in the third aspect. The function may be implemented by hardware, or may be implemented by executing corresponding software by hardware. The hardware or the software includes one or more modules corresponding to the foregoing function.

In a possible implementation, the communication apparatus includes: a receiving unit, configured to receive a first TA value from a network device, where the first TA value is a value determined based on a timing advance offset and a distance between the network device and a terminal device; and a sending unit, configured to send a first uplink signal to the network device based on the first TA value, where boundaries of uplink frames corresponding to the first uplink signal and a second uplink signal in the network device are the same, and the first uplink signal and the second uplink signal are signals of a same system.

It may be understood that specific content of the seventh aspect corresponds to content of the fifth aspect. For corresponding features of the seventh aspect and beneficial effects achieved by the seventh aspect, refer to descriptions of the fifth aspect. To avoid repetition, detailed descriptions are properly omitted herein.

According to an eighth aspect, an embodiment of this application provides a communication apparatus.

For beneficial effects, refer to descriptions of the fourth aspect. Details are not described herein again. The communication apparatus has a function of implementing behavior in the method instance in the fourth aspect. The function may be implemented by hardware, or may be implemented by executing corresponding software by hardware. The hardware or the software includes one or more modules corresponding to the foregoing function.

In a possible implementation, the communication apparatus includes: a sending unit, configured to send a first TA value to a terminal device, where the first TA value is a value determined based on a timing advance offset and a distance between a network device and the terminal device; and a receiving unit, configured to receive a first uplink signal from the terminal device, where a sending time point of the first uplink signal is determined based on the first TA value, boundaries of uplink frames corresponding to the first uplink signal and a second uplink signal in the network device are the same, and the first uplink signal and the second uplink signal are signals of a same system.

It may be understood that specific content of the eighth aspect corresponds to content of the sixth aspect. For corresponding features of the eighth aspect and beneficial effects achieved by the eighth aspect, refer to descriptions of the sixth aspect. To avoid repetition, detailed descriptions are properly omitted herein.

According to a ninth aspect, a communication apparatus is provided. The communication apparatus may be a terminal device, or may be an apparatus (for example, a chip, a chip system, or a circuit) in the terminal device or an apparatus that can be used together with the terminal device. The communication apparatus may include a processor, configured to execute a computer program. When the computer program is executed, the communication apparatus is enabled to perform the method in any one of the first aspect and the possible implementations of the first aspect or the method in any one of the third aspect and the possible implementations of the third aspect.

In a possible implementation, the communication apparatus further includes a memory, and the memory is configured to store the foregoing computer program. Optionally, the processor and the memory are integrated together. Optionally, the memory is located outside the communication apparatus.

In a possible implementation, the communication apparatus further includes a communication interface, and the communication interface is used by the communication apparatus to communicate with another device, for example, to send or receive data and/or a signal. For example, the communication interface may be a transceiver, a circuit, a bus, a module, or another type of communication interface.

According to a tenth aspect, a communication apparatus is provided. The communication apparatus may be a network device, or may be an apparatus (for example, a chip, a chip system, or a circuit) in the network device or an apparatus that can be used together with the network device. The communication apparatus may include a processor, configured to execute a computer program. When the computer program is executed, the communication apparatus is enabled to perform the method in any one of the second aspect and the possible implementations of the second aspect or the method in any one of the fourth aspect and the possible implementations of the fourth aspect.

In a possible implementation, the communication apparatus further includes a memory, and the memory is configured to store the foregoing computer program. Optionally, the processor and the memory are integrated together. Optionally, the memory is located outside the communication apparatus.

In a possible implementation, the communication apparatus further includes a communication interface, and the communication interface is used by the communication apparatus to communicate with another device, for example, to send or receive data and/or a signal. For example, the communication interface may be a transceiver, a circuit, a bus, a module, or another type of communication interface.

According to an eleventh aspect, this application provides a communication system. The communication system includes at least one terminal device and at least one network device, and when running in the communication system, the at least one terminal device and the at least one network device are configured to perform the methods in any one of the first aspect and the possible implementations of the first aspect, any one of the second aspect and the possible implementations of the second aspect, any one of the third aspect and the possible implementations of the third aspect, and any one of the fourth aspect and the possible implementations of the fourth aspect.

According to a twelfth aspect, a computer-readable storage medium is provided. The computer-readable storage medium stores a computer program or computer instructions, and when the computer program or the computer instructions are run, the communication methods provided in the foregoing aspects are implemented.

According to a thirteenth aspect, a computer program product including executable instructions is further provided. When the computer program product runs on user equipment, some or all steps of the methods in any one of the first aspect and the possible implementations of the first aspect, any one of the second aspect and the possible implementations of the second aspect, any one of the third aspect and the possible implementations of the third aspect, and any one of the fourth aspect and the possible implementations of the fourth aspect are performed.

According to a fourteenth aspect, a chip system is provided. The chip system includes a processor, and may further include a memory, configured to implement the methods in any one of the first aspect and the possible implementations of the first aspect, any one of the second aspect and the possible implementations of the second aspect, any one of the third aspect and the possible implementations of the third aspect, and any one of the fourth aspect and the possible implementations of the fourth aspect. The chip system may include a chip, or may include a chip and another discrete component.

## BRIEF DESCRIPTION OF DRAWINGS

To describe technical solutions in embodiments of this application more clearly, the following briefly describes the accompanying drawings for describing embodiments. It is clear that the accompanying drawings in the following descriptions show some embodiments of this application, and a person of ordinary skill in the art may still derive other drawings from these accompanying drawings without creative efforts.

FIG. 1 is a diagram of a network architecture according to an embodiment of this application;
FIG. 2 is a diagram in which boundaries of uplink frames are the same according to an embodiment of this application;
FIG. 3 is a diagram of uplink and downlink signal transmission;
FIG. 4 is another diagram of uplink and downlink signal transmission;
FIG. 5 is a diagram of interaction of a communication method according to an embodiment of this application;
FIG. 6 is a diagram of an effect of uplink and downlink signal transmission according to an embodiment of this application;
FIG. 7 is a diagram of a scenario of sending uplink signals according to an embodiment of this application;
FIG. 8 is a diagram of a structure of a communication apparatus according to an embodiment of this application;
FIG. 9 is a diagram of a structure of another communication apparatus according to an embodiment of this application;
FIG. 10 is a diagram of a structure of still another communication apparatus according to an embodiment of this application; and
FIG. 11 is a diagram of a structure of a terminal device according to an embodiment of this application.

## DESCRIPTION OF EMBODIMENTS

To make a person skilled in the art understand technical solutions in this application better, the following clearly and completely describes the technical solutions in embodiments of this application with reference to the accompanying drawings in embodiments of this application. It is clear that, the described embodiments are merely a part rather than all of embodiments of this application. All other embodiments obtained by a person of ordinary skill in the art based on embodiments of this application without creative efforts shall fall within the protection scope of this application.

To better understand a communication method and apparatus, and a computer-readable storage medium that are provided in embodiments of this application, the following first describes a network architecture used in embodiments of this application.

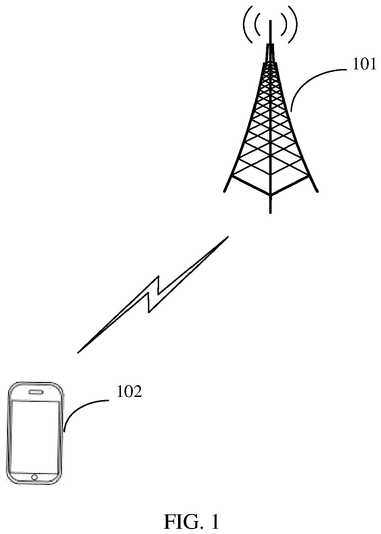

FIG. 1 is a diagram of a network architecture according to an embodiment of this application. As shown in FIG. 1, the network architecture may include a network device 101 and a terminal device 102. The terminal device 102 may be connected to the network device 101 in a wireless manner, and may access a core network by using the network device 101. The terminal device 102 may be at a fixed location, or may be movable.

The network device 101 is a device having a wireless transceiver function, and is configured to communicate with the terminal device 102, or may be a device that allows the terminal device to access a wireless network. The network device 101 may be a node in a radio access network, or may be referred to as a base station, or may be referred to as a radio access network (radio access network, RAN) node (or device). The network device may be an evolved NodeB (evolved NodeB, eNB or eNodeB) in LTE, a next generation NodeB (next generation NodeB, gNB) in a 5G network, a base station in a future evolved public land mobile network (public land mobile network, PLMN), a broadband network gateway (broadband network gateway, BNG), an aggregation switch or a non-3$^{rd}$ generation partnership project (3$^{rd}$ generation partnership project, 3GPP) access device, or the like. Optionally, the network device in this embodiment of this application may include base stations in various forms, for example, a macro base station, a micro base station (also referred to as a small cell), a relay station, an access point, a device for implementing a base station function in a communication system evolved after 5G, an access point (access point, AP) in a Wi-Fi system, a transmission reception point (transmission reception point, TRP), a transmitting point (transmitting point, TP), a device that undertakes a base station function in a mobile switching center, device-to-device (Device-to-Device, D2D), vehicle-to-everything (vehicle-to-everything, V2X), and machine-to-machine (machine-to-machine, M2M) communication, and may further include a central unit (central unit, CU) and a distributed unit (distributed unit, DU) in a cloud radio access network (cloud radio access network, C-RAN) system, and a network device in an NTN communication system, that is, may be deployed on a high-altitude platform or a satellite. This is not specifically limited in this embodiment of this application.

The terminal device 102 is an entity on a user side that is configured to receive or transmit a signal, for example, user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a mobile phone (mobile phone), a cellular phone, a cordless phone, a session initiation protocol (session initiation protocol, SIP) phone, a tablet computer (Pad), a computer with a wireless receiving and sending function, a virtual reality (virtual reality, VR) terminal device, an augmented reality (augmented reality, AR) terminal device, a wireless terminal in industrial control (industrial control), a wireless local loop (wireless local loop, WLL) station, a personal digital assistant (personal digital assistant, PDA), a handheld device having a wireless communication function, a computing device or another processing device connected to a wireless modem, a vehicle-mounted device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable device (such as a smart watch, a smart band, and a pedometer), a terminal device in the 5G network, a terminal device in a PLMN evolved after 5G, or the like. This is not limited in this embodiment of this application. The terminal device may be deployed on land, including being deployed indoor, outdoor, handheld, or in-vehicle, may be deployed on a water surface (for example, on a ship), or may be deployed in the air (for example, on an airplane, a balloon, or a satellite).

By way of example but not limitation, in this embodiment of this application, the terminal device may alternatively be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that is directly worn on a body or integrated into clothes or accessories of a user. The wearable device is not only a hardware device, but also implement powerful functions through software support, data interaction, and cloud interaction. Generally, the wearable intelligent device includes a full-featured and large-size device that can implement complete or partial functions without depending on a smartphone, such as a smart watch or smart glasses, and a device that focuses on only one type of application function and needs to work with another device such as a smartphone, for example, various smart bands or smart jewelry. In addition, in this embodiment of this application, the terminal may alternatively be a terminal in an internet of things (internet of things, IoT) system. IoT is an important part of development of information technologies, and a main technical feature of the IoT is connecting an object to a network by using a communication technology, to implement an intelligent network of human-machine interconnection and thing-thing interconnection. In this embodiment of this application, the IoT technology may implement massive connections, deep coverage, and terminal power saving by using, for example, a narrow band (narrow band, NB) technology. In addition, in this embodiment of this application, the terminal device may alternatively include a sensor such as an intelligent printer, a train detector, or a gas station. Main functions of the terminal device include collecting data (by some terminal devices), receiving control information and downlink data of the network device, sending an electromagnetic wave, and transmitting uplink data to the network device.

The technical solutions in embodiments of this application may be applied to various communication systems, for example, an LTE system, an LTE frequency division duplex (frequency division duplex, FDD) system, an LTE time division duplex (time division duplex, TDD) system, a long term evolution advanced (LTE advanced, LTE-A) system, a $5^{th}$ generation ($5^{th}$ generation, 5G) communication system such as an NR system, and may be further applied to a wireless fidelity (wireless fidelity, Wi-Fi) system, a communication system supporting convergence of a plurality of wireless technologies, or a communication system evolved after 5G, such as a $6^{th}$ generation ($6^{th}$ generation, 6G) communication system.

Embodiments of this application may be applied to an NR multi-frequency networking scenario, including multi-frequency technology scenarios such as carrier aggregation, SUL, and multi-radio access technology dual connectivity (Multi-Radio Access Technology Dual Connectivity, MRDC). Embodiments of this application may be further applied to another possible future multi-frequency technology scenario, for example, NR dual connectivity (Dual Connectivity, DC) and multi-radio access technology multi-connectivity (Multi-Radio Access Technology Multi-Connectivity, MRMC).

A specific structure of an execution body of the method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the network device or the terminal device, or a functional module that can invoke and execute the program in the network device or the terminal device.

It should be noted that a quantity and types of terminal devices included in the network architecture shown in FIG. 1 are merely examples. This embodiment of this application is not limited thereto. For example, more or fewer terminal devices that communicate with the network device may be further included. For brevity, details are not described in the accompanying drawings. In addition, in the network architecture shown in FIG. 1, although the network device and the terminal device are shown, the application scenario may not be limited to including the network device and the terminal device. For example, the application scenario may further include a core network node or a device configured to bear a virtualized network function. This is clear to a person skilled in the art, and details are not described herein.

The following first provides definitions of technical terms that may occur in embodiments of this application. Terms used in implementations of this application are only used to explain specific embodiments of this application, but are not intended to limit this application.

(1) Timing advance (Timing Advance, TA)

The TA is generally used for uplink transmission of a terminal device, and is time by which a frame in which the terminal device sends uplink data is advanced in comparison with a downlink frame. To synchronize a time point at which a receiver side, for example, a network device side, receives uplink signals from different terminal devices, a TA mechanism is used in long term evolution (Long Term Evolution, LTE).

For example, the receiver side is the network device side. A value of the TA is a time difference between a start time point of a frame in which a network device sends a downlink signal and a start time point of a frame in which the terminal device sends an uplink signal. By controlling an offset of each terminal device, the network device may control time points at which uplink signals from different terminal devices arrive at the network device. In comparison with a terminal device relatively close to the network device, a terminal device relatively far away from the network device has a larger transmission delay in information transmission with the network device. Therefore, the terminal device relatively far away from the network device needs to send an uplink signal in advance in comparison with the terminal device relatively close to the network device. In a possible case, the network device may send, to the terminal device by using a timing advance command (Timing Advance Command, TAC) field in a random access response (random access response, RAR), the TA or a parameter for determining the TA.

In an LTE protocol, a TA value is 0 μs in a frequency division duplex (frequency division duplex, FDD) scenario, and is 20 μs in a time division duplex (time division duplex, TDD) scenario.

In a new radio (New Radio, NR) protocol, the terminal device may determine the TA value according to the following formula:

$$T_{TA} = \left( N_{TA} + N_{TA-offset} \right) \cdot T_C.$$

$T_{TA}$ represents the TA value, and $N_{TA}$ represents a signal transfer delay amount caused by a physical distance between the terminal device and the network device. After receiving the downlink signal from the network device, the terminal device sends the uplink signal. There is a time difference between a time point at which the uplink signal arrives at the network device and a sending time point. $N_{TA}$ is determined based on total time needed for uplink and downlink transmission. Because distances between different terminal devices and the network device are different, time differences of the different terminal devices are also different. In this way, timing advances for signal transfer delays caused by the corresponding physical distances between the different terminal devices and the network device are also different. The network device may determine a value of $N_{TA}$ by measuring the uplink signal of the terminal device, and send the value of $N_{TA}$ to the terminal device. For example, the uplink signal may be any one of the following: a sounding reference signal (Sounding Reference Signal, SRS), a demodulation reference signal (Demodulation Reference Signal, DMRS), a channel quality indicator (Channel Quality Indicator, QCI), an acknowledgment (Acknowledgement, ACK) message, a negative acknowledgment (Nacknowledgement, NACK) message, a physical uplink shared channel (Physical Uplink Shared Channel, PUSCH), or the like. $N_{TA-offset}$ represents a timing advance offset, to be specific, a time offset of an uplink window on the network device side relative to a downlink window, and is used to ensure that a network device in a time division duplex (time division duplex, TDD) mode has sufficient time to complete switching from uplink receiving to downlink sending at a same frequency. The uplink window on the network device side may be understood as a time window used by the network device to receive the uplink signal, and the downlink window on the network device side may be understood as a time window used by the network device to send the downlink signal. In a period in which the network device sends downlink data and a period in which the network device receives uplink data, switching time is needed between on and off of an analog component. In this case, there is a corresponding receiving/sending switching delay. Generally, a value of $N_{TA-offset}$ may be broadcast by the network device to the terminal device by using a system information block 1 (System Information Block 1, SIB 1) and a synchronization signal and physical broadcast channel block (Synchronization Signal and Physical Broadcast Channel block, SSB). In addition, the value of $N_{TA-offset}$ may alternatively be a value predefined in a protocol.

In the foregoing formula, $T_C = 1/(\Delta f_{max} \cdot N_f)$, $\Delta f_{max} = 480 \cdot 10^3$ hertz (hertz, Hz), and $N_f = 4096$. It may be understood that, $T_C$ is used for time unit conversion, and $\Delta f_{max}$ and $N_f$ are parameters defined in an existing NR protocol and used for calculating $T_C$.

(2) Dynamic spectrum sharing (Dynamic Spectrum Sharing, DSS)

The DSS is a technology that allows a 4G LTE system and a 5G NR system to share a same time-frequency resource.

When the DSS technology is not used, the LTE system and the NR system each have a different frequency range, and spectrums of the LTE system and the NR system do not interfere with each other. However, in this case, frequency usage efficiency is not necessarily high. For example, at a moment, there is almost no user in the LTE system, but a quantity of users in the NR system is far greater than a quantity of users in LTE. In this case, frequency resources of the NR system are insufficient, but frequency resources of LTE are idle and cannot be used. Therefore, to resolve the foregoing problem, the DSS technology enables the LTE system and the NR system to dynamically share a spectrum.

(3) Single timing advance group (timing advance group, TAG) scenario

In the single TAG scenario, one or more cells belonging to a single TAG use a same TA value. Because the one or more cells may use a plurality of different carriers, the plurality of different carriers belonging to the single TAG use the same TA value. For example, an NUL carrier and an SUL carrier may belong to a same TAG. In other words, an NUL carrier and an SUL carrier in one TAG use a same TA value. A timing advance offset of the NUL carrier is also the same as a timing advance offset of the SUL carrier.

The single TAG scenario in embodiments of this application may include carrier switching in carrier aggregation of a downlink reference signal when a frequency division duplex mode and the time division duplex mode coexist (for example, sounding reference signal (Sounding Reference Signal, SRS) carrier switching), carrier aggregation-based uplink transmit channel switching (a single TAG scenario supported in a protocol) in 3rd generation partnership project (3rd Generation Partnership Project, 3GPP) release (release, R) 16, concurrent carrier aggregation in a single TAG scenario in 3GPP R15, supplementary uplink in 3GPP R15, supplementary uplink in 3GPP R16, and the like. It should be noted that, in the single TAG scenario, a protocol requires that boundaries of uplink frames of FDD and TDD be aligned.

(4) Frame boundary

In embodiments of this application, the frame boundary may be a location of a frame.
A boundary of an uplink frame may be understood as a location of a frame in which a plurality of uplink signals from a same terminal device or different terminal devices arrive at a network device. That boundaries of uplink frames are the same may be understood as that locations of uplink frames corresponding to a plurality of uplink signals in the network device are the same, including that the plurality of uplink signals arrive at the network device at a same time point, or the network device demodulates the plurality of uplink signals at a same time point. A boundary of a downlink frame may be understood as a location of a frame in which the network device sends a downlink signal to the terminal device. That boundaries of downlink frames are the same may be understood as that locations of frames in which the network device sends downlink signals to the terminal device are the same.

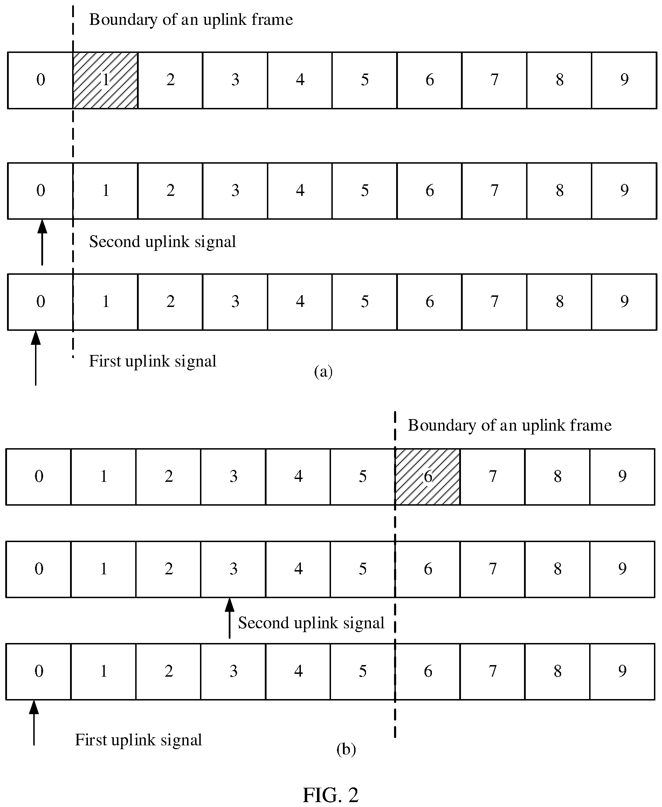

FIG. 2 is a diagram in which boundaries of uplink frames are the same according to an embodiment of this application. FIG. 2 is used as an example for description. As shown in (a) in FIG. 2, it is assumed that a first uplink signal is sent to a network device in a frame 0 based on a first TA value, a second uplink signal is sent to the network device in the frame 0 based on a second TA value, and the first uplink signal and the second uplink signal arrive at the network device at a same time point. The network device receives the first uplink signal and the second uplink signal in the frame 0, and synchronously demodulates the first uplink signal and the second uplink signal in a frame 1. As shown in (b) in FIG. 2, it is assumed that a first uplink signal is sent to a network device in a frame 0 based on a first TA value, and a second uplink signal is sent to the network device in a frame 3 based on a second TA value. The network device receives the first uplink signal and the second uplink signal respectively in the frame 0 and the frame 3, and synchronously demodulates the first uplink signal and the second uplink signal in a frame 6. It can be learned that frame boundaries of uplink frames of the first uplink signal and the second uplink signal are the same.

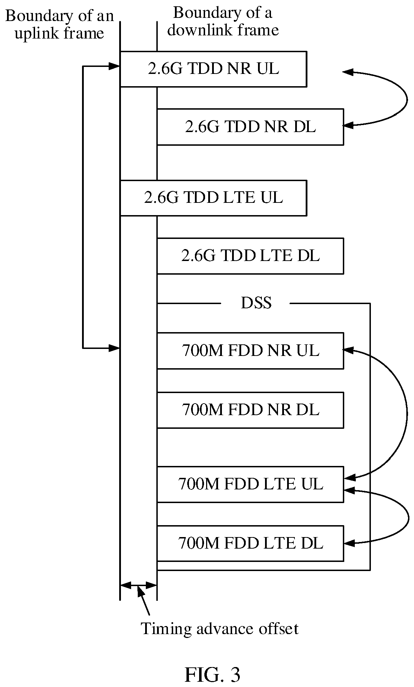

In a scenario in which different systems coexist, for example, in a DSS scenario, because a TA value in an LTE system is predefined, and a TA value in an NR system is determined based on a timing advance offset, TA values of a terminal device in the LTE system and the NR system are different, and boundaries of uplink frames of uplink signals are different. In some application scenarios in which the boundaries of the uplink frames of the uplink signals are required to be the same, for example, uplink carrier aggregation in a single TAG scenario, a bit error rate of a signal is high. For example, FIG. 3 is a diagram of uplink and downlink signal transmission. As shown in FIG. 3, for example, an NR uplink frame (2.6G TDD NR UL), an NR downlink frame (2.6G TDD NR DL), an LTE uplink frame (2.6G TDD LTE UL), and an LTE downlink frame (2.6G TDD LTE DL) are included in a TDD mode. It is assumed timing advance offsets of NR and LTE in the TDD mode are the same. To be specific, the NR uplink frame is advanced by the timing advance offset in comparison with the NR downlink frame, and the LTE uplink frame is advanced by the timing advance offset in comparison with the LTE downlink frame. In a DSS scenario, an NR uplink frame (700M FDD NR UL), an NR downlink frame (700M FDD NR DL), an LTE uplink frame (700M FDD LTE UL), and an LTE downlink frame (700M FDD LTE DL) are included in an FDD mode. A boundary of the NR uplink frame and a boundary of the NR downlink frame are the same, and a boundary of the LTE uplink frame and a boundary of the LTE downlink frame are the same. Because the timing advance offset is for the TDD mode, for the FDD mode, a timing advance offset in the FDD mode may be understood as 0. It can be seen from the figure that, because different uplink frequency bands of the NR system correspond to different duplex modes, to be specific, an uplink frequency band 700M of the NR system corresponds to an FDD duplex mode, and a frequency band 2.6G corresponds to a TDD duplex mode, frame boundaries of 700M FDD NR UL and 2.6G TDD NR UL are different. Similarly, frame boundaries of 700M FDD LTE UL and 2.6G TDD LTE UL are also different. For an application scenario in which boundaries of uplink frames of uplink signals need to be the same, for example, a single TAG scenario, a bit error rate of a signal is high.

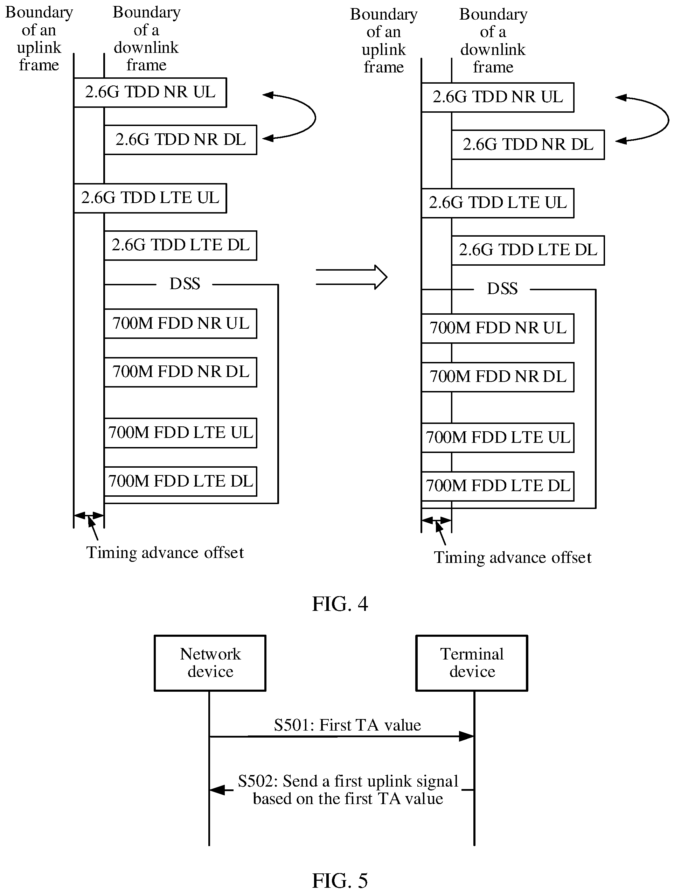

To make the boundaries of uplink frames of 700M FDD NR UL and 2.6G TDD NR UL to be the same and make the boundaries of uplink frames of 700M FDD LTE UL and 2.6G TDD LTE UL to be the same, one solution is to modify a downlink frame offset to enable the boundaries of the uplink frames to be the same. FIG. 4 is another diagram of uplink and downlink signal transmission. As shown in FIG. 4, by modifying a downlink frame offset in a DSS scenario in a method on a left part of FIG. 4, a same positive timing advance offset is configured in each of the DSS scenario and a TDD scenario. In other words, a value of the timing advance offset is consistent with a value of a timing advance offset in the TDD scenario. Finally, as shown in a method on a right part of FIG. 2, uplink and downlink signals in a TDD mode in the DSS scenario are shifted forward by the value of the timing advance offset, so that boundaries of uplink frames of 700M FDD NR UL and 2.6G TDD NR UL are the same, and boundaries of uplink frames of 700M FDD LTE UL and 2.6G TDD LTE UL are the same. Although the boundaries of the uplink frames are aligned, boundaries of downlink frames of 700M FDD NR DL and 2.6G TDD NR DL are different, and boundaries of downlink frames of 700M FDD LTE DL and 2.6G TDD LTE DL are different. During communication, different frame boundaries of downlink signals cause poor system performance.

Therefore, how to reduce a bit error rate of a signal in a scenario in which different systems coexist is an urgent problem to be resolved.

Based on the foregoing network architecture, the following describes a communication method provided in embodiments of this application. FIG. 5 is a diagram of interaction of a communication method according to an embodiment of this application. A function performed by a network device in this application may alternatively be performed by an apparatus (for example, a chip, a chip system, or a circuit) in the network device, and a function performed by a terminal device in this application may alternatively be performed by an apparatus (for example, a chip, a chip system, or a circuit) in the terminal device. As shown in FIG. 5, the communication method may include the following steps.

S501: The network device sends a first TA value to the terminal device.

Correspondingly, the terminal device receives the first TA value from the network device.

The first TA value may be a value determined based on a timing advance offset and a distance between the network device and the terminal device.

For example, the network device may determine the first TA value according to the following formula:

$$T_{TA1} = \left( N_{TA} + N_{TA-offset} \right) \cdot T_C.$$

$T_{TA1}$ represents the first TA value, $N_{TA}$ represents a signal transfer delay amount caused by a corresponding physical distance between the network device and the terminal device, $N_{TA\text{-}offset}$ represents the timing advance offset, $T_C = 1/(\Delta f_{max} \cdot N_f)$, $\Delta f_{max} = 480 \cdot 10^3$ Hz, and $N_f = 4096$. Herein, for descriptions of related parameters, refer to related content in the foregoing definitions of the technical terms.

The timing advance offset may be an offset of an uplink window relative to a downlink window. For example, for the network device, the timing advance offset is an offset of an uplink receiving window relative to a downlink sending window. For the terminal device, the timing advance offset is an offset of an uplink sending window relative to a downlink receiving window. Optionally, the timing advance offset may be a predefined value, for example, an absolute value of the timing advance offset is 7 $\mu$s, 13 $\mu$s, or 20 $\mu$s. The uplink window may be earlier than the downlink window, or the uplink window is later than the downlink window. That is, the timing advance offset may be positive or negative.

After determining the first TA value, the network device may send the first TA value to the terminal device before the terminal device sends an uplink signal. For example, the network device may send, in a random access procedure, the first TA value to the terminal device by using a RAR. Optionally, the network device may indicate the first TA value by using a TAC field in the RAR.

S502: The terminal device sends a first uplink signal to the network device based on the first TA value.

Correspondingly, the network device receives the first uplink signal from the terminal device.

After receiving the first TA value from the network device, the terminal device may send the first uplink signal to the network device based on the first TA value. It may be understood as that, after receiving the first TA value from the network device, the terminal device may send the first uplink signal to the network device in advance by time of the first TA value. It should be noted that the first TA value is generally a positive number, indicating that time is adjusted forward. In other words, the terminal device sends the first uplink signal in advance by a time period of the TA value.

Boundaries of uplink frames corresponding to the first uplink signal and a second uplink signal in the network device are the same.

The first uplink signal and the second uplink signal may be signals of different systems. For example, the first uplink signal is a signal of an LTE system, and the second uplink signal is a signal of an NR system; or the first uplink signal is a signal of an NR system, and the second uplink signal is a signal of an LTE system. It should be noted that, in this embodiment of this application, LTE and NR are merely used as examples for description, and the system may alternatively be a 6G communication system, another communication system evolved after 5G, or the like. A system type is not limited in this application.

It may be understood that, a TA value in the LTE system is predefined. However, in the NR system, the terminal device needs to determine a TA value based on the timing advance offset. Because TA values in different systems are different, boundaries of uplink frames corresponding to uplink signals in the network device are different when different systems coexist. In this case, a bit error rate of a signal is high when some application scenarios in which the boundaries of the uplink frames of the uplink signals need to be the same are implemented. Different from that the network device separately sends the timing advance offset and the delay amount to the terminal device, and the terminal device determines a TA value based on the timing advance offset and the delay amount from the network device, in this embodiment of this application, the network device determines the first TA value and sends the first TA value to the terminal device, so that first TA values in different systems are unified, and when different systems (for example, the LTE system and the NR system) coexist, the boundaries of the uplink frames corresponding to the uplink signals in the network device are the same. Therefore, the application scenario in which the boundaries of the uplink frames of the uplink signals need to be the same when different systems coexist, for example, a single TAG scenario, can be implemented, to reduce the bit error rate of the signal.

Alternatively, the first uplink signal and the second uplink signal may be signals of a same system. For example, both the first uplink signal and the second uplink signal are signals of an LTE system, or both the first uplink signal and the second uplink signal are signals of an NR system. It may be understood that, for example, in the NR system, after determining the first TA value, the network device sends the first TA value to the terminal device, and the terminal device does not need to receive the timing advance offset and the delay amount from the network device and then determine a TA value based on the timing advance offset and the delay amount. Therefore, energy consumption of the terminal device can be reduced.

The first uplink signal and the second uplink signal may be uplink signals in different duplex modes (duplex modes). The different duplex modes may be any two different duplex modes in an FDD mode, a TDD mode, and an SUL mode. It may be understood that the duplex mode in this embodiment of this application may alternatively be another duplex mode evolved after 5G. A type of the duplex mode is not limited in this application.

It may be understood that, because the timing advance offset is for the TDD mode, TA values of the first uplink signal and the second uplink signal in different duplex modes are different. Because the TA values in the different duplex modes are different, the boundaries of the uplink frames corresponding to the uplink signals in the different duplex modes in the network device are different. Therefore, the bit error rate of the signal is high when some application scenarios in which the boundaries of the uplink frames of the uplink signals need to be the same are implemented. In this embodiment of this application, the network device determines the TA value and sends the TA value to the terminal device, so that TA values of the uplink signals in different duplex modes are unified, and the boundaries of the uplink frames corresponding to the uplink signals in the different duplex modes (for example, the FDD mode and the TDD mode) in the network device are the same. Therefore, the application scenario in which the boundaries of the uplink frames of the uplink signals need to be the same in different duplex modes can be implemented, for example, the single TAG scenario, to reduce the bit error rate of the signal.

Further, the first uplink signal and the second uplink signal may be uplink signals of different systems and in different duplex modes. Details are as follows. For example, the first uplink signal is a signal of the LTE system and in the TDD mode, and the second uplink signal is a signal of the NR system and in the FDD mode; the first uplink signal is a signal of the LTE system and in the FDD mode, and the second uplink signal is a signal of the NR system and in the TDD mode; the first uplink signal is a signal of the NR system and in the TDD mode, and the second uplink signal is a signal of the LTE system and in the FDD mode; or the first uplink signal is a signal of the NR system and in the FDD mode, and the second uplink signal is a signal of the LTE system and in the TDD mode.

Optionally, the first uplink signal and the second uplink signal may be uplink signals of a same system and in different duplex modes. Details are as follows. For example, the first uplink signal is a signal of the LTE system and in the TDD mode, and the second uplink signal is a signal of the LTE system and in the FDD mode; the first uplink signal is a signal of the LTE system and in the FDD mode, and the second uplink signal is a signal of the LTE system and in the TDD mode; the first uplink signal is a signal of the NR system and in the TDD mode, and the second uplink signal is a signal of the NR system and in the FDD mode; or the first uplink signal is a signal of the NR system and in the FDD mode, and the second uplink signal is a signal of the NR system and in the TDD mode.

Optionally, the first uplink signal and the second uplink signal may be uplink signals of different systems and in a same duplex mode. Details are as follows. For example, the first uplink signal is a signal of the LTE system and in the TDD mode, and the second uplink signal is a signal of the NR system and in the TDD mode; the first uplink signal is a signal of the NR system and in the TDD mode, and the second uplink signal is a signal of the LTE system and in the TDD mode; the first uplink signal is a signal of the LTE system and in the FDD mode, and the second uplink signal is a signal of the NR system and in the FDD mode; or the first uplink signal is a signal of the NR system and in the FDD mode, and the second uplink signal is a signal of the LTE system and in the FDD mode.

Optionally, the first uplink signal and the second uplink signal may be uplink signals of a same system and in a same duplex mode. Details are as follows. For example, the first uplink signal is a signal of the LTE system and in the TDD mode, and the second uplink signal is a signal of the LTE system and in the TDD mode; the first uplink signal is a signal of the LTE system and in the FDD mode, and the second uplink signal is a signal of the LTE system and in the FDD mode; the first uplink signal is a signal of the NR system and in the TDD mode, and the second uplink signal is a signal of the NR system and in the TDD mode; or the first uplink signal is a signal of the NR system and in the FDD mode, and the second uplink signal is a signal of the NR system and in the FDD mode.

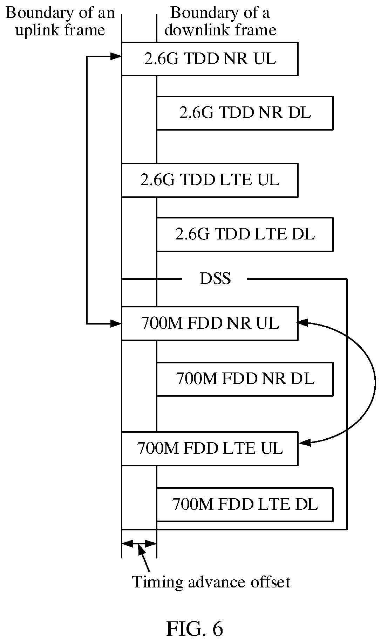

It can be seen from FIG. 6 that, according to the solution in this embodiment of this application, in comparison with FIG. 3, boundaries of uplink frames of 2.6G TDD NR UL, 2.6G TDD LTE UL, 700M FDD NR UL, and 700M FDD LTE UL can be the same when the TDD mode and the FDD mode in a DSS scenario coexist. Further, an implementation requirement of the application scenario in which the boundaries of the uplink frames of the uplink signals need to be the same, for example, the single TAG scenario, can be met. In this embodiment of this application, the network device uniformly determines the TA value and then sends the TA value to the terminal device. This can resolve a problem that the boundaries of the uplink frames corresponding to the uplink signals in the network device are different caused by the timing advance offset. Therefore, the application scenario in which the boundaries of the uplink frames of the uplink signals need to be the same can be implemented, for example, the single TAG scenario, to reduce the bit error rate of the signal.

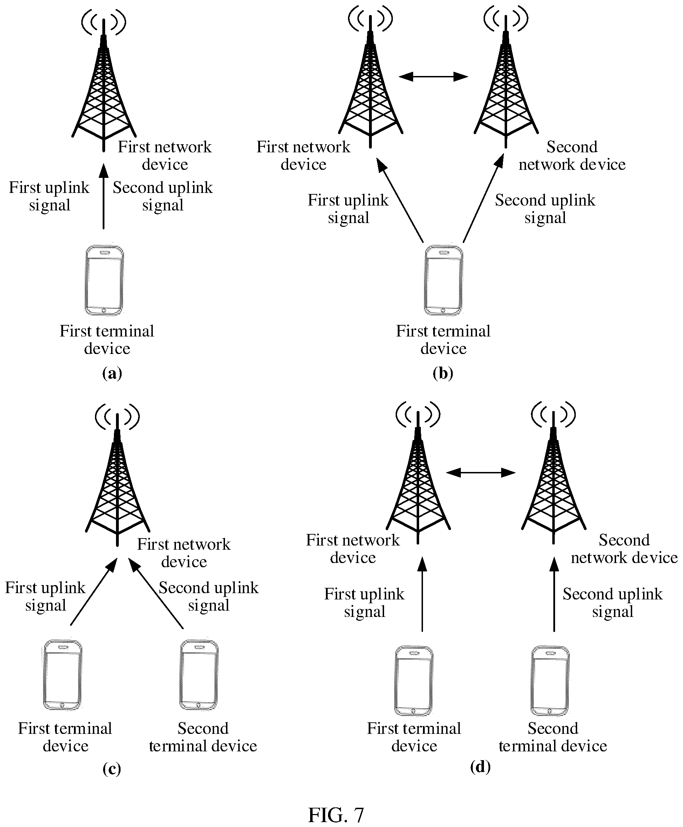

With reference to the communication method described in FIG. 5, the first uplink signal and the second uplink signal may be from a same terminal device, or may be from different terminal devices. The first uplink signal and the second uplink signal may be received by a same network device, or may be received by different network devices. FIG. 7 is a diagram of a scenario of sending uplink signals according to an embodiment of this application. There may be the following several specific implementations.

In a possible implementation, as shown in (a) in FIG. 7, a first uplink signal may be an uplink signal between a first terminal device and a first network device, and a second uplink signal may also be an uplink signal between the first terminal device and the first network device. For example, it is assumed that the first terminal device sends the first uplink signal and the second uplink signal at a first location. After determining a first TA value based on the first location of the first terminal device and a timing advance offset of the first network device, the first network device may send the first TA value to the first terminal device. After receiving the first TA value from the first network device, the first terminal device may send the first uplink signal and the second uplink signal to the first network device in advance by time of the first TA value. For another example, it is assumed that the first terminal device sends the first uplink signal at a first location. After sending the first uplink signal, the first terminal device moves, and sends the second uplink signal at a second location. To enable boundaries of uplink frames corresponding to the first uplink signal and the second uplink signal in the network device to be the same, the first network device may determine a first TA value based on the first location of the first terminal device and a timing advance offset of the first network device, determine a second TA value based on the second location of the first terminal device and the timing advance offset of the first network device, and then send the first TA value and the second TA value to the first terminal device. The terminal device may send the first uplink signal to the first network device in advance by time of the first TA value, and may send the second uplink signal to the first network device in advance by time of the second TA value.

It may be understood that, if the first uplink signal and the second uplink signal are sent by different systems of the first terminal device, for example, the first uplink signal is sent by an NR system of the first terminal device, and the second uplink signal is sent by an LTE system of the first terminal device, because TA values in the different systems are different, the boundaries of the uplink frames corresponding to the first uplink signal and the second uplink signal in the first network device are different when the different systems coexist. If the first uplink signal and the second uplink signal are sent by the first terminal device in different duplex modes, for example, the first uplink signal is a signal in an FDD mode, and the second uplink signal is a signal in a TDD mode, because TA values in the different duplex modes are different, the boundaries of the uplink frames corresponding to the first uplink signal and the second uplink signal in the first network device are different. However, in this scenario, the first network device determines the TA value and sends the TA value to the first terminal device, so that the TA values in the different systems or different duplex modes can be unified, and in a case in which the different systems (for example, the LTE system and the NR system) coexist or in the different duplex modes (for example, the FDD mode and the TDD mode), the boundaries of the uplink frames corresponding to the first uplink signal and the second uplink signal in the first network device are the same. Therefore, in an application scenario in which the boundaries of the uplink frames of the first uplink signal and the second uplink signal need to be the same, for example, a single TAG scenario, can be implemented, to reduce a bit error rate of a signal.

In a possible implementation, as shown in (b) in FIG. 7, a first uplink signal may be an uplink signal between a first terminal device and a first network device, and a second uplink signal may be an uplink signal between the first terminal device and a second network device. For example, to enable boundaries of uplink frames corresponding to the first uplink signal and the second uplink signal in network devices to be the same, the first network device communicates with the second network device to determine arrival time points of the first uplink signal and the second uplink signal. The first network device may determine a first TA value based on a timing advance offset of the first network device and a distance between the first network device and the first terminal device, and send the first TA value to the first terminal device. The second network device may determine a second TA value based on a timing advance offset of the second network device and a distance between the second network device and the first terminal device, and send the second TA value to the first terminal device. After receiving the first TA value from the first network device, the first terminal device may send the first uplink signal to the first network device in advance by time of the first TA value. After receiving the second TA value from the second network device, the first terminal device may send the second uplink signal to the second network device in advance by time of the second TA value.

It may be understood that, if the first uplink signal and the second uplink signal are sent by different systems of the first terminal device, for example, the first uplink signal is sent by an NR system of the first terminal device, and the second uplink signal is sent by an LTE system of the first terminal device, because TA values in the different systems are different, the boundaries of the uplink frames corresponding to the first uplink signal and the second uplink signal in the first network device and the second network device are different when the different systems coexist. If the first uplink signal and the second uplink signal are sent by the first terminal device in different duplex modes, for example, the first uplink signal is a signal in an FDD mode, and the second uplink signal is a signal in a TDD mode, because TA values in the different duplex modes are different, the boundaries of the uplink frames corresponding to the first uplink signal and the second uplink signal in the first network device and the second network device are different. However, in this scenario, after the first network device negotiates with the second network device, the first network device determines the first TA value and sends the first TA value to the first terminal device, and the second network device determines the second TA value and sends the second TA value to the first terminal device, so that the TA values in the different systems or different duplex modes can be unified, and in a case in which the different systems (for example, the LTE system and the NR system) coexist or in the different duplex modes (for example, the FDD mode and the TDD mode), the boundaries of the uplink frames corresponding to the first uplink signal and the second uplink signal in the first network device and the second network device are the same. Therefore, an application scenario in which the boundaries of the uplink frames of the first uplink signal and the second uplink signal need to be the same, for example, a single TAG scenario, can be implemented, to reduce a bit error rate of a signal.

In a possible implementation, as shown in (c) in FIG. 7, a first uplink signal may be an uplink signal between a first terminal device and a first network device, and a second uplink signal may be an uplink signal between a second terminal device and the first network device. For example, the first network device may determine a first TA value based on a timing advance offset of the first network device and a distance between the first network device and the first terminal device, and send the first TA value to the first terminal device. The first network device may determine a second TA value based on the timing advance offset of the first network device and a distance between the first network device and the second terminal device, and send the second TA value to the second terminal device. After receiving the first TA value from the first network device, the first terminal device may send the first uplink signal to the first network device in advance by time of the first TA value. After receiving the second TA value from the first network device, the second terminal device may send the second uplink signal to the first network device in advance by time of the second TA value.

It may be understood that, if the first uplink signal and the second uplink signal are respectively sent by different systems of the first terminal device and the second terminal device, for example, the first uplink signal is sent by an NR system of the first terminal device, and the second uplink signal is sent by an LTE system of the second terminal device, because TA values in the different systems are different, boundaries of uplink frames corresponding to the first uplink signal and the second uplink signal in the first network device are different when the different systems coexist. If the first uplink signal and the second uplink signal are respectively sent by the first terminal device and the second terminal device in different duplex modes, for example, the first uplink signal is a signal in an FDD mode, and the second uplink signal is a signal in a TDD mode, because TA values in the different duplex modes are different, boundaries of uplink frames corresponding to the first uplink signal and the second uplink signal in the first network device are different. However, in this scenario, the first network device determines the first TA value and the second TA value, and sends the first TA value to the first terminal device and the second TA value to the second terminal device respectively, so that the TA values in the different systems or different duplex modes can be unified, and in a case in which the different systems (for example, the LTE system and the NR system) coexist or in the different duplex modes (for example, the FDD mode and the TDD mode), the boundaries of the uplink frames corresponding to the first uplink signal and the second uplink signal in the first network device are the same. Therefore, an application scenario in which the boundaries of the uplink frames of the first uplink signal and the second uplink signal need to be the same, for example, a single TAG scenario, can be implemented, to reduce a bit error rate of a signal.

In a possible implementation, as shown in (d) in FIG. 7, a first uplink signal may be an uplink signal between a first terminal device and a first network device, and a second uplink signal may be an uplink signal between a second terminal device and a second network device. For example, to enable boundaries of uplink frames corresponding to the first uplink signal and the second uplink signal in network devices to be the same, the first network device communicates with the second network device to determine arrival time points of the first uplink signal and the second uplink signal. The first network device may determine a first TA value based on a timing advance offset of the first network device and a distance between the first network device and the first terminal device, and send the first TA value to the first terminal device. The second network device may determine a second TA value based on a timing advance offset of the second network device and a distance between the second network device and the second terminal device, and send the second TA value to the second terminal device. After receiving the first TA value from the first network device, the first terminal device may send the first uplink signal to the first network device in advance by time of the first TA value. After receiving the second TA value from the second network device, the second terminal device may send the second uplink signal to the second network device in advance by time of the second TA value.

Optionally, the first TA value and the second TA value may be the same or different. In other words, sending time points of the two uplink signals may be the same or different.

It may be understood that, if the first uplink signal and the second uplink signal are respectively sent by different systems of the first terminal device and the second terminal device, for example, the first uplink signal is sent by an NR system of the first terminal device, and the second uplink signal is sent by an LTE system of the second terminal device, because TA values in the different systems are different, the boundaries of the uplink frames corresponding to the first uplink signal and the second uplink signal in the first network device and the second network device are different when the different systems coexist. If the first uplink signal and the second uplink signal are respectively sent by the first terminal device and the second terminal device in different duplex modes, for example, the first uplink signal is a signal in an FDD mode, and the second uplink signal is a signal in a TDD mode, because TA values in the different duplex modes are different, the boundaries of the uplink frames corresponding to the first uplink signal and the second uplink signal in the first network device and the second network device are different. However, in this scenario, after the first network device negotiates with the second network device, the first network device determines the first TA value and sends the first TA value to the first terminal device, and the second network device determines the second TA value and sends the second TA value to the second terminal device, so that the TA values in the different systems or different duplex modes can be unified, and in a case in which the different systems (for example, the LTE system and the NR system) coexist or in the different duplex modes (for example, the FDD mode and the TDD mode), the boundaries of the uplink frames corresponding to the first uplink signal and the second uplink signal in the first network device and the second network device are the same. Therefore, an application scenario in which the boundaries of the uplink frames of the first uplink signal and the second uplink signal need to be the same, for example, a single TAG scenario, can be implemented, to reduce a bit error rate of a signal.

The foregoing describes method embodiments provided in embodiments of this application, and the following describes apparatus embodiments in embodiments of this application.

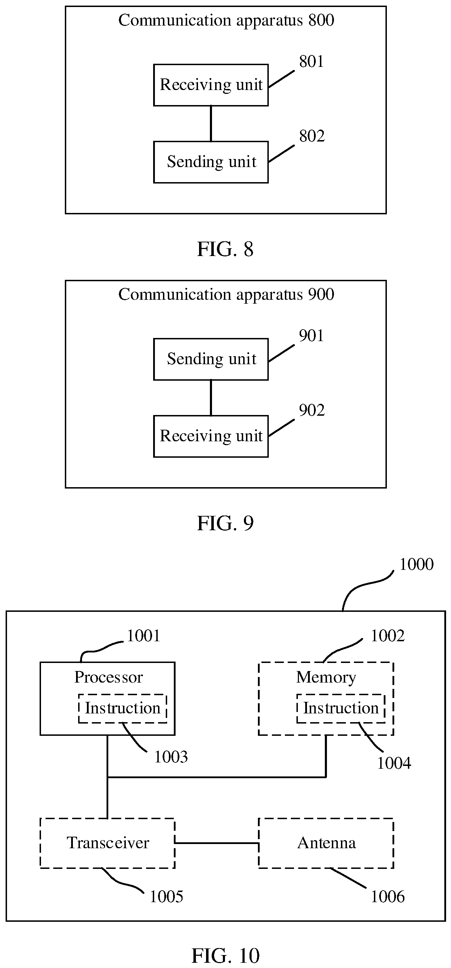

FIG. 8 is a diagram of a structure of a communication apparatus according to an embodiment of this application. The communication apparatus may be a terminal device, or may be an apparatus (for example, a chip, a chip system, or a circuit) in the terminal device or an apparatus that can be used together with the terminal device.

As shown in FIG. 8, in a possible implementation, a communication apparatus 800 includes at least a receiving unit 801 and a sending unit 802.

The receiving unit 801 is configured to receive a first TA value from a network device, where the first TA value is a value determined based on a timing advance offset and a distance between the network device and the terminal device.

The sending unit 802 is configured to send a first uplink signal to the network device based on the first TA value, where boundaries of uplink frames corresponding to the first uplink signal and a second uplink signal in the network device are the same, and the first uplink signal and the second uplink signal are signals of different systems.

In a possible case, that the first uplink signal and the second uplink signal are signals of different systems includes:

The first uplink signal is a signal of a long term evolution LTE system, and the second uplink signal is a signal of a new radio NR system; or
the first uplink signal is a signal of an NR system, and the second uplink signal is a signal of an LTE system.

In a possible case, the first uplink signal and the second uplink signal are signals in different duplex modes.

In a possible case, the different duplex modes are any two of the following different duplex modes: an FDD mode, a TDD mode, and an SUL mode.

In a possible case, the receiving unit 801 is specifically configured to receive a RAR message from the network device, where the RAR message includes the first TA value.

In a possible case, a TAC in the RAR message includes the first TA value.

In a possible case, the timing advance offset is an offset of an uplink window relative to a downlink window.

In a possible case, the timing advance offset is a TA offset.

In a possible case, an absolute value of the timing advance offset is 7 $\mu$s, 13 $\mu$s, or 20 $\mu$s.

In a possible implementation, a communication apparatus 800 includes at least a receiving unit 801 and a sending unit 802.

The receiving unit 801 is configured to receive a first TA value from a network device, where the first TA value is a value determined based on a timing advance offset and a distance between the network device and the terminal device; and
the sending unit 802 is configured to send a first uplink signal to the network device based on the first TA value, where boundaries of uplink frames corresponding to the first uplink signal and a second uplink signal in the network device are the same, and the first uplink signal and the second uplink signal are signals of a same system.

In a possible case, that the first uplink signal and the second uplink signal are signals of different systems includes:

The first uplink signal is a signal of a long term evolution LTE system, and the second uplink signal is a signal of a new radio NR system; or
the first uplink signal is a signal of an NR system, and the second uplink signal is a signal of an LTE system.

In a possible case, the first uplink signal and the second uplink signal are signals in different duplex modes.

In a possible case, the different duplex modes are any two of the following different duplex modes: an FDD mode, a TDD mode, and an SUL mode.

In a possible case, the receiving unit 801 is specifically configured to receive a RAR message from the network device, where the RAR message includes the first TA value.

In a possible case, a TAC in the RAR message includes the first TA value.

In a possible case, the timing advance offset is an offset of an uplink window relative to a downlink window.

In a possible case, the timing advance offset is a TA offset.

In a possible case, an absolute value of the timing advance offset is 7 $\mu$s, 13 $\mu$s, or 20 $\mu$s.

For more detailed descriptions of the receiving unit 801 and the sending unit 802, directly refer to related descriptions of the terminal device in the method embodiment shown in FIG. 5. Details are not described herein again.

FIG. 9 is a diagram of a structure of another communication apparatus according to an embodiment of this application. The communication apparatus may be a network device, or may be an apparatus (for example, a chip, a chip system, or a circuit) in the network device or an apparatus that can be used together with the network device.

As shown in FIG. 9, in a possible implementation, a communication apparatus 900 includes at least a sending unit 901 and a receiving unit 902.

The sending unit 901 is configured to send a first TA value to a terminal device, where the first TA value is a value determined based on a timing advance offset and a distance between the network device and the terminal device.

The receiving unit 902 is configured to receive a first uplink signal from the terminal device, where a sending time point of the first uplink signal is determined based on the first TA value, boundaries of uplink frames corresponding to the first uplink signal and a second uplink signal in the network device are the same, and the first uplink signal and the second uplink signal are signals of different systems.

In a possible case, that the first uplink signal and the second uplink signal are signals of different systems includes:

The first uplink signal is a signal of a long term evolution LTE system, and the second uplink signal is a signal of a new radio NR system; or
the first uplink signal is a signal of an NR system, and the second uplink signal is a signal of an LTE system.

In a possible case, the first uplink signal and the second uplink signal are signals in different duplex modes.

In a possible case, the different duplex modes are any two of the following different duplex modes: an FDD mode, a TDD mode, and an SUL mode.

In a possible case, the sending unit 901 is specifically configured to:
send a random access response RAR message to the terminal device, where the RAR message includes the first TA value.

In a possible case, a TAC in the RAR message includes the first TA value.

In a possible case, the timing advance offset is an offset of an uplink window relative to a downlink window.

In a possible case, the timing advance offset is a TA offset.

In a possible case, an absolute value of the timing advance offset is 7 $\mu$s, 13 $\mu$s, or 20 $\mu$s.

In another possible implementation, a communication apparatus 900 includes at least a sending unit 901 and a receiving unit 902.

The sending unit 901 is configured to send a first TA value to a terminal device, where the first TA value is a value determined based on a timing advance offset and a distance between the network device and the terminal device; and

the receiving unit 902 is configured to receive a first uplink signal from the terminal device, where a sending time point of the first uplink signal is determined based on the first TA value, boundaries of uplink frames corresponding to the first uplink signal and a second uplink signal in the network device are the same, and the first uplink signal and the second uplink signal are signals of a same system.

In a possible case, that the first uplink signal and the second uplink signal are signals of different systems includes:

The first uplink signal is a signal of a long term evolution LTE system, and the second uplink signal is a signal of a new radio NR system; or
the first uplink signal is a signal of an NR system, and the second uplink signal is a signal of an LTE system.

In a possible case, the first uplink signal and the second uplink signal are signals in different duplex modes.

In a possible case, the different duplex modes are any two of the following different duplex modes: an FDD mode, a TDD mode, and an SUL mode.

In a possible case, the sending unit 901 is specifically configured to:

send a random access response RAR message to the terminal device, where the RAR message includes the first TA value.

In a possible case, a TAC in the RAR message includes the first TA value.

In a possible case, the timing advance offset is an offset of an uplink window relative to a downlink window.

In a possible case, the timing advance offset is a TA offset.

In a possible case, an absolute value of the timing advance offset is 7 $\mu$s, 13 $\mu$s, or 20 $\mu$s.

For more detailed descriptions of the sending unit 901 and the receiving unit 902, directly refer to related descriptions of the network device in the method embodiment shown in FIG. 5. Details are not described herein again.

Based on the foregoing network architecture, FIG. 10 is a diagram of a structure of still another communication apparatus according to an embodiment of this application. As shown in FIG. 10, an apparatus 1000 may include one or more processors 1001. The processor 1001 may also be referred to as a processing unit, and may implement a corresponding control function. The processor 1001 may be a general-purpose processor, a dedicated processor, or the like. For example, the processor 1001 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 1001 may alternatively store instructions 1003, and the instructions 1003 may be run by the processor, to enable the apparatus 1000 to perform the methods described in the foregoing method embodiments.

In another optional design, the processor 1001 may include a transceiver unit configured to implement receiving and sending functions. For example, the transceiver unit may be a transceiver circuit, an interface, an interface circuit, or a communication interface. A transceiver circuit, an interface, or an interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 1000 may include a circuit, and the circuit may implement the sending, receiving, or communication function in the foregoing method embodiments.

Optionally, the apparatus 1000 may include one or more memories 1002. The memory 1002 may store instructions 1004, and the instructions may be run on the processor, to enable the apparatus 1000 to perform the methods described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 1000 may further include a transceiver 1005 and/or an antenna 1006. The processor 1001 may be referred to as a processing unit, and control the apparatus 1000. The transceiver 1005 may be referred to as a transceiver unit, a transceiver machine, a transceiver circuit, a transceiver apparatus, a transceiver module, or the like, and is configured to implement the receiving and sending functions.

Optionally, the apparatus 1000 in this embodiment of this application may be configured to perform the method described in FIG. 7 in embodiments of this application.

In a possible case, the communication apparatus 1000 may be a terminal device, or may be an apparatus (for example, a chip, a chip system, or a circuit) in the terminal device or an apparatus that can be used together with the terminal device. When the computer program instructions stored in the memory 1002 are executed, the transceiver 1005 is configured to perform operations performed by the receiving unit 801 and the sending unit 802 in the foregoing embodiment, and the transceiver 1005 is further configured to send information to a communication apparatus other than the communication apparatus. The terminal device may be further configured to perform various methods performed by the terminal device in the method embodiment in FIG. 5. Details are not described again.

In a possible case, the communication apparatus 1000 may be a network device, or may be an apparatus (for example, a chip, a chip system, or a circuit) in the network device or an apparatus that can be used together with the network device. When the computer program instructions stored in the memory 1002 are executed, the transceiver 1005 is configured to receive information from a communication apparatus other than the communication apparatus, and the transceiver 1005 is further configured to perform operations performed by the sending unit 901 and the receiving unit 902 in the foregoing embodiment. The network device may be further configured to perform various methods performed by the network device in the method embodiment in FIG. 5. Details are not described again.

The processor and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may also be fabricated by using various IC process technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be a network device or a terminal device. However, a range of the apparatus described in this application is not limited thereto, and a structure of the apparatus may not be limited to FIG. 10. The apparatus may be an independent device, or may be a part of a larger device. For example, the apparatus may be:

(1) an independent integrated circuit IC, a chip, or a chip system or subsystem;
(2) a set of one or more ICs, where optionally, the IC set may further include a storage component configured to store data and/or instructions;
(3) an ASIC, for example, a mobile station modem (mobile station modem, MSM);
(4) a module that can be embedded in another device;
(5) others, or the like.

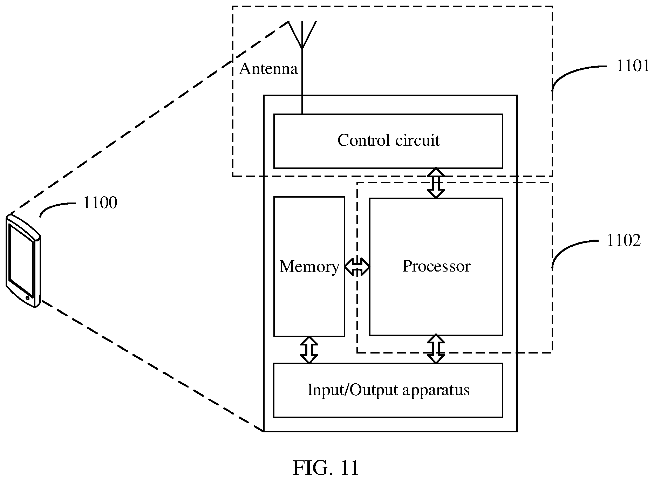

FIG. 11 is a diagram of a structure of a terminal device according to an embodiment of this application. FIG. 11 shows only main components of the terminal device. As shown in FIG. 11, a terminal device 1100 includes a processor, a memory, a control circuit, an antenna, and an input/output apparatus. The processor is mainly configured to: process a communication protocol and communication data, control an entire terminal, execute a software program, and process data of the software program. The memory is mainly configured to store the software program and the data. A radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data entered by a user and output data to the user.

After the terminal device is powered on, the processor may read a software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in the form of an electromagnetic wave through the antenna. When data is sent to the terminal, the radio frequency circuit receives the radio frequency signal through the antenna, further converts the radio frequency signal into a baseband signal, and outputs the baseband signal to the processor. The processor converts the baseband signal into data, and processes the data.

For ease of description, FIG. 11 shows only one memory and one processor. An actual terminal may include a plurality of processors and a plurality of memories. The memory may also be referred to as a storage medium, a storage device, or the like. This is not limited in this embodiment of this application.

In an optional implementation, the processor may include a baseband processor and a central processing unit. The baseband processor is mainly configured to process the communication protocol and the communication data, and the central processing unit is mainly configured to: control the entire terminal, execute the software program, and process the data of the software program. The processor in FIG. 11 is integrated with functions of the baseband processor and the central processing unit. A person skilled in the art may understand that, the baseband processor and the central processing unit may be independent processors, and are interconnected by using a technology such as a bus. A person skilled in the art may understand that the terminal may include a plurality of baseband processors to adapt to different network standards, and the terminal may include a plurality of central processing units to enhance a processing capability of the terminal. All the components in the terminal may be connected through various buses. The baseband processor may also be described as a baseband processing circuit or a baseband processing chip. The central processing unit may also be described as a central processing circuit or a central processing chip. A function of processing the communication protocol and the communication data may be built in the processor, or may be stored in the storage unit in a form of a software program. The processor executes the software program to implement a baseband processing function.

In an example, as shown in FIG. 11, the terminal device 1100 includes a transceiver 1101 and a processor 1102. An antenna and a control circuit that have receiving and sending functions may be considered as the transceiver 1101, and the transceiver may also be referred to as a transceiver machine, a transceiver apparatus, or the like. Optionally, a component that is in the transceiver 1101 and that is configured to implement the receiving function may be considered as a receiving unit, and a component that is in the transceiver 1101 and that is configured to implement the sending function may be considered as a sending unit. That is, the transceiver 1101 includes the receiving unit and the sending unit. For example, the receiving unit may also be referred to as a receiver machine, a receiver, a receiver circuit, or the like. The sending unit may be referred to as a transmitter machine, a transmitter, a transmitter circuit, or the like. Optionally, the receiving unit and the sending unit may be one integrated unit, or may be a plurality of independent units. The receiving unit and the sending unit may be in one geographical location, or may be distributed in a plurality of geographical locations.

In an embodiment, the transceiver 1101 is configured to perform operations performed by the receiving unit 801 and the sending unit 802 in the foregoing embodiment. The terminal device 1100 may be further configured to perform various methods performed by the terminal device in the method embodiment described in FIG. 5. Details are not described again.

An embodiment of this application further provides a computer-readable storage medium, and the computer-readable storage medium stores a computer program. When the program is executed by the processor, a procedure related to the terminal device in the communication method provided in the foregoing method embodiments may be implemented.

An embodiment of this application further provides a computer-readable storage medium, and the computer-readable storage medium stores a computer program. When the program is executed by the processor, a procedure related to the network device in the communication method provided in the foregoing method embodiments may be implemented.

An embodiment of this application further provides a computer program product. When the computer program product runs on a computer or the processor, the computer or the processor is enabled to perform one or more steps in any one of the foregoing communication methods. When each of component modules of the foregoing device is implemented in a form of a software functional unit and is sold or used as an independent product, the component modules may be stored in the computer-readable storage medium.

An embodiment of this application further provides a chip system, including at least one processor and a communication interface. The communication interface and the at least one processor are interconnected through a line, and the at least one processor is configured to run a computer program or instructions, to perform some or all of the steps recorded in any one of the method embodiments corresponding to FIG. 5. The chip system may include a chip, or may include a chip and another discrete component.

An embodiment of this application further discloses a communication system. The system includes a terminal device and a network device. For specific descriptions, refer to the communication method shown in FIG. 5.

It should be understood that the memory mentioned in embodiments of this application may be a volatile memory or a nonvolatile memory, or may include both a volatile memory and a nonvolatile memory. The nonvolatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). The memory is any other medium that can carry or store expected program code in a form of an instruction structure or a data structure and that can be accessed by a computer, but is not limited thereto. The memory in embodiments of this application may alternatively be a circuit or any other apparatus that can implement a storage function, and is configured to store program instructions and/or data.

It should be further understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate or a transistor logic device, or a discrete hardware component, the memory (storage module) is integrated into the processor.

It should be noted that the memory described in this specification is intended to include, but is not limited to, these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that units and algorithm steps in the examples described with reference to embodiments provided in this specification may be implemented by electronic hardware or a combination of computer software and electronic hardware. Whether the functions are performed by the hardware or the software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located at one location, or may be distributed on a plurality of network units. Some or all of the units may be selected based on an actual requirement to achieve objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a ROM, a RAM, a magnetic disk, or an optical disc.

A sequence of the steps in the method in embodiments of this application may be adjusted, combined, and deleted based on an actual requirement.

The modules/units in the apparatus in embodiments of this application may be combined, divided, and deleted based on an actual requirement.

In conclusion, the foregoing embodiments are merely intended for describing the technical solutions of this application, but not for limiting this application.

Although this application is described in detail with reference to the foregoing embodiments, a person of ordinary skill in the art should understand that modifications to the technical solutions recorded in the foregoing embodiments or equivalent replacements to some technical features thereof may still be made; and these modifications or replacements do not make the essence of the corresponding technical solutions depart from the scope of the technical solutions in embodiments of this application.

**Claims**

1. A communication method, comprising:

   receiving a first timing advance TA value from a network device, wherein the first TA value is a value determined based on a timing advance offset and a distance between the network device and a terminal device; and
   sending a first uplink signal to the network device based on the first TA value, wherein boundaries of uplink frames corresponding to the first uplink signal and a second uplink signal in the network device are the same, and the first uplink signal and the second uplink signal are signals of different systems.

2. The method according to claim 1, wherein that the first uplink signal and the second uplink signal are signals of different systems comprises:

   the first uplink signal is a signal of a long term evolution LTE system, and the second uplink signal is a signal of a new radio NR system; or the first uplink signal is a signal of an NR system, and the second uplink signal is a signal of an LTE system.

3. The method according to claim 1 or 2, wherein the first uplink signal and the second uplink signal are signals in different duplex modes.

4. The method according to claim 3, wherein the different duplex modes are any two of the following different duplex modes: a frequency division duplex FDD mode, a time division duplex TDD mode, and a supplementary uplink SUL mode.

5. The method according to any one of claims 1 to 4, wherein the receiving a first TA value from a network device comprises:
   receiving a random access response RAR message from the network device, wherein the RAR message comprises the first TA value.

6. The method according to claim 5, wherein a timing advance command TAC in the RAR message comprises the first TA value.

7. The method according to any one of claims 1 to 6, wherein the timing advance offset is an offset of an uplink window relative to a downlink window.

8. The method according to any one of claims 1 to 7, wherein an absolute value of the timing advance offset is 7 microseconds $\mu$s, 13 $\mu$s, or 20 $\mu$s.

9. A communication method, comprising:

   sending a first timing advance TA value to a terminal device, wherein the first TA value is a value determined based on a timing advance offset and a distance between a network device and the terminal device; and
   receiving a first uplink signal from the terminal device, wherein a sending time point of the first uplink signal is determined based on the first TA value, boundaries of uplink frames corresponding to the first uplink signal and a second uplink signal in the network device are the same, and the first uplink signal and the second uplink signal are signals of different systems.

10. The method according to claim 9, wherein that the first uplink signal and the second uplink signal are signals of different systems comprises:

    the first uplink signal is a signal of a long term evolution LTE system, and the second uplink signal is a signal of a new radio NR system; or the first uplink signal is a signal of an NR system, and the second uplink signal is a signal of an LTE system.

11. The method according to claim 9 or 10, wherein the first uplink signal and the second uplink signal are signals in different duplex modes.

12. The method according to claim 11, wherein the different duplex modes are any two of the following different duplex modes: a frequency division duplex FDD mode, a time division duplex TDD mode, and a supplementary uplink SUL mode.

13. The method according to any one of claims 9 to 12, wherein the sending a first TA value to a terminal device comprises:
    sending a random access response RAR message to the terminal device, wherein the RAR message comprises the first TA value.

14. The method according to claim 13, wherein a timing advance command TAC in the RAR message comprises the first TA value.

15. The method according to any one of claims 9 to 14, wherein the timing advance offset is an offset of an uplink window relative to a downlink window.

16. The method according to any one of claims 9 to 15, wherein an absolute value of the timing advance offset is 7 microseconds $\mu$s, 13 $\mu$s, or 20 $\mu$s.

17. A communication apparatus, comprising:

    a receiving unit, configured to receive a first timing advance TA value from a network device, wherein the first TA value is a value determined based on a timing advance offset and a distance between the network device and a terminal device; and
    a sending unit, configured to send a first uplink signal to the network device based on the first TA value, wherein boundaries of uplink frames corresponding to the first uplink signal and a second uplink signal in the network device are the same, and the first uplink signal and the second uplink signal are signals of different systems.

18. The apparatus according to claim 17, wherein the receiving unit is specifically configured to:
    receive a random access response RAR message from the network device, wherein the RAR message comprises the first TA value.

19. A communication apparatus, comprising:

    a sending unit, configured to send a first timing advance TA value to a terminal device, wherein the first TA value is a value determined based on a timing advance offset and a distance between a network device and the terminal device; and
    a receiving unit, configured to receive a first uplink signal from the terminal device, wherein a sending time point of the first uplink signal is determined based on the first TA value, boundaries of uplink frames corresponding to the first uplink signal and a second uplink signal in the network device are the same, and the first uplink signal and the second uplink signal are signals of different systems.

20. The apparatus according to claim 19, wherein the sending unit is specifically configured to:
    send a random access response RAR message to the terminal device, wherein the RAR message comprises the first TA value.

21. A communication apparatus, comprising a processor, wherein the processor is configured to execute instructions stored in a memory, and when the instructions are executed,

    the method according to any one of claims 1 to 8 is implemented; or
    the method according to any one of claims 9 to 16 is implemented.

22. The communication apparatus according to claim 21, further comprising one or more of the memory and a transceiver, wherein the transceiver is configured to receive and send data and/or signaling.

23. A computer-readable storage medium, wherein the computer-readable storage medium stores a computer program or computer instructions, and when the computer program or the computer instructions are executed by a processor,

    the method according to any one of claims 1 to 8 is implemented; or
    the method according to any one of claims 9 to 16 is implemented.

24. A computer program product comprising program instructions, wherein when the program instructions are run on a computer,

    the method according to any one of claims 1 to 8 is implemented; or
    the method according to any one of claims 9 to 16 is implemented.

25. A chip system, comprising at least one processor, a memory, and an interface circuit, wherein the memory, the interface circuit, and the at least one processor are interconnected through a line, at least one memory stores instructions, and when the instructions are executed by the processor,

    the method according to any one of claims 1 to 8 is implemented; or
    the method according to any one of claims 9 to 16 is implemented.

FIG. 1

Boundary of an uplink frame

| 0 | 1 | 2 | 3 | 4 | 5 | 6 | 7 | 8 | 9 |

| 0 | 1 | 2 | 3 | 4 | 5 | 6 | 7 | 8 | 9 |

Second uplink signal

| 0 | 1 | 2 | 3 | 4 | 5 | 6 | 7 | 8 | 9 |

First uplink signal

(a)

Boundary of an uplink frame

| 0 | 1 | 2 | 3 | 4 | 5 | 6 | 7 | 8 | 9 |

| 0 | 1 | 2 | 3 | 4 | 5 | 6 | 7 | 8 | 9 |

Second uplink signal

| 0 | 1 | 2 | 3 | 4 | 5 | 6 | 7 | 8 | 9 |

First uplink signal

(b)

FIG. 2

Boundary of an
uplink frame

Boundary of a
downlink frame

2.6G TDD NR UL

2.6G TDD NR DL

2.6G TDD LTE UL

2.6G TDD LTE DL

DSS

700M FDD NR UL

700M FDD NR DL

700M FDD LTE UL

700M FDD LTE DL

Timing advance offset

FIG. 3

Boundary
of an
uplink
frame

Boundary
of a
downlink
frame

Boundary
of an
uplink
frame

Boundary
of a
downlink
frame

| 2.6G TDD NR UL |
| 2.6G TDD NR DL |
| 2.6G TDD LTE UL |
| 2.6G TDD LTE DL |
| DSS |
| 700M FDD NR UL |
| 700M FDD NR DL |
| 700M FDD LTE UL |
| 700M FDD LTE DL |

Timing advance offset

Timing advance offset

FIG. 4

| Network device | | Terminal device |

S501: First TA value

S502: Send a first uplink signal
based on the first TA value

FIG. 5

Boundary of an
uplink frame

Boundary of a
downlink frame

| 2.6G TDD NR UL |
|---|

| 2.6G TDD NR DL |
|---|

| 2.6G TDD LTE UL |
|---|

| 2.6G TDD LTE DL |
|---|

— DSS —

| 700M FDD NR UL |
|---|

| 700M FDD NR DL |
|---|

| 700M FDD LTE UL |
|---|

| 700M FDD LTE DL |
|---|

Timing advance offset

FIG. 6

First network device

First uplink signal | Second uplink signal

First terminal device

**(a)**

First network device

Second network device

First uplink signal

Second uplink signal

First terminal device

**(b)**

First network device

First uplink signal

Second uplink signal

First terminal device

Second terminal device

**(c)**

First network device

Second network device

First uplink signal

Second uplink signal

First terminal device

Second terminal device

**(d)**

FIG. 7

Communication apparatus 800

Receiving unit — 801

Sending unit — 802

FIG. 8

Communication apparatus 900

Sending unit — 901

Receiving unit — 902

FIG. 9

1000

Processor 1001
Instruction
1003

Memory 1002
Instruction
1004

Transceiver
1005

Antenna
1006

FIG. 10

FIG. 11

**EP 4 492 879 A1**

| | | |
|---|---|---|
| **INTERNATIONAL SEARCH REPORT** | International application No. | |
| | **PCT/CN2023/081383** | |

| A. | CLASSIFICATION OF SUBJECT MATTER |
|---|---|
| | H04W56/00(2009.01)i |

According to International Patent Classification (IPC) or to both national classification and IPC

| B. | FIELDS SEARCHED |
|---|---|

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

3GPP, CNTXT, ENTXT, DWPI, CNKI: 边界, 不同, 定时, 对齐, 多, 共存, 上行, 时间, 提前, 同, 系统, 帧, 4g, 5g, advance, dss, fdd, frame, lte, nr, overlap, RAT, TA, TAG, tdd, time, ul, uplink, advanc+, DC+, coexist+, overlap+, dual+, connect+, bound +, co-exist+, align+, multi+, border+, coexsit+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | PANASONIC. "Summary for the maintenance of TA"<br>*3GPP TSG-RAN WG1 Meeting #94, R1-1809824*, 24 August 2018 (2018-08-24),<br>section 3 | 1-25 |
| A | CN 112188638 A (CHINA ACADEMY OF INFORMATION AND COMMUNICATIONS TECHNOLOGY) 05 January 2021 (2021-01-05)<br>entire document | 1-25 |
| A | CN 101998614 A (ZTE CORP.) 30 March 2011 (2011-03-30)<br>entire document | 1-25 |
| A | CN 109891957 A (TELEFONAKTIEBOLAGET LM ERICSSON (PUBL)) 14 June 2019 (2019-06-14)<br>entire document | 1-25 |
| A | HUAWEI et al. "Discussion on Doppler compensation, timing advance and RACH for NTN"<br>*3GPP TSG RAN WG1 Meeting #99, R1-1911860*, 22 November 2019 (2019-11-22),<br>entire document | 1-25 |

✓ Further documents are listed in the continuation of Box C.    ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 May 2023** | **23 May 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/081383** |

**C.      DOCUMENTS CONSIDERED TO BE RELEVANT**

| Category* | Citation of document, with indication, where appropriate, of the relevant passages | Relevant to claim No. |
|---|---|---|
| A | NOKIA et al. "Timing alignment of UL backhaul" *3GPP TSG-RAN WG1 Meeting #60, R1-101444,* 26 February 2010 (2010-02-26), entire document | 1-25 |

Form PCT/ISA/210 (second sheet) (July 2022)

INTERNATIONAL SEARCH REPORT
Information on patent family members

International application No.

**PCT/CN2023/081383**

| Patent document cited in search report | | | Publication date (day/month/year) | Patent family member(s) | | | Publication date (day/month/year) |
|---|---|---|---|---|---|---|---|
| CN | 112188638 | A | 05 January 2021 | WO | 2022068713 | A1 | 07 April 2022 |
| CN | 101998614 | A | 30 March 2011 | WO | 2011020426 | A1 | 24 February 2011 |
| CN | 109891957 | A | 14 June 2019 | US | 2018242268 | A1 | 23 August 2018 |
| | | | | EP | 3533263 | A1 | 04 September 2019 |
| | | | | WO | 2018080364 | A1 | 03 May 2018 |

Form PCT/ISA/210 (patent family annex) (July 2022)

**REFERENCES CITED IN THE DESCRIPTION**

**Patent documents cited in the description**

- CN 202210304597